# EUROPÄISCHE PATENTSCHRIFT

(11) **EP 1 234 346 B1**
(45) Veröffentlichungstag und Bekanntmachung des Hinweises auf die Patenterteilung: **15.08.2007**
(21) Anmeldenummer: 00975738.6
(22) Anmeldetag: 29.11.2000
(51) Int. Cl.: H01L 41/09, H02N 2/12

(54) **PIEZOELEKTRISCHER ANTRIEB**
PIEZOELECTRIC DRIVE
ENTRAINEMENT PIEZO-ELECTRIQUE

(30) Priorität: 29.11.1999 CH 217899; 24.05.2000 CH 104100
(43) Veröffentlichungstag der Anmeldung: 28.08.2002
(73) Patentinhaber: miniswys SA, 2503 Biel (CH)
(72) Erfinder: MOCK, Elmar, CH-2504 Biel/Bienne (CH); WITTEVEEN, Bontko, NL-5912 JB Venlo (NL)
(74) Vertreter: Frei, Alexandra Sarah
(86) Internationale Anmeldenummer: PCT/CH2000/000636
(87) Internationale Veröffentlichungsnummer: WO 2001/041228

(56) Entgegenhaltungen:
- EP-A- 0 505 848
- DE-A- 3 920 726

## Beschreibung

Die Erfindung betrifft piezoelektrische Antriebe, piezoelektrische Resonatoren für Antriebe und die Verwendung von piezoelektrischen Antrieben sowie piezoelektrischen Resonatoren gemäss der Definition der Patentansprüche.

Bestimmte, sogenannte piezoelektrische Materialien lassen sich durch Anlegen einer elektrischen Wechselspannung zum mechanischen Schwingen anregen. Dieser physikalische Effekt wird auch umgekehrter piezoelektrischer Effekt genannt. Eine bekannte Anwendung dieses Effektes ist die Verwendung piezoelektrischer Materialien als Schwingungserreger in Resonatoren. Solche piezoelektrischen Resonatoren lassen sich in Antriebe einbauen, um drehbar gelagerte Rotoren anzutreiben.

Die aus dem Stand er Technik bekannten Antriebe die auf piezoelektrischen Effekten beruhen weisen gravierende Nachteile auf, die eine breite industrielle Verwendung als Antriebe bis heute verhindert haben. Zu den gravierendsten Nachteile gehören eine komplexe Ansteuerung der piezoelektrischen Schwingelemente, eine grosse Verschmutzungsgefahr, sehr geringe mechanische Toleranzen, die einen störungsfreien Betrieb verhindern, ein schlechter Wirkungsgrad. Mit den heute bekannten Lösungen sind zudem nur sehr geringe Drehzahlen mit einem äusserst geringen Drehmoment möglich. Eine Verkleinerung dieser Antriebe, so dass sie beispielsweise als Antriebe in der Mikro- und Medizinaltechnologie oder der Uhrenbranche eingesetzt werden können, ist nur mit sehr grossen Aufwand verbunden, so dass eine günstige Herstellung nicht möglich ist. Der grosse mechanische Abrieb der bekannten Anordnungen erfordert zudem die Verwendung besonders harter und daher teurer Werkstoffe, die schwierig zu verarbeiten sind. Nur schon geringe Abriebe bewirken eine Vergrösserung des Spiels und eine Verschmutzung des Antriebs, was unweigerlich zu einem Ausfall nach kurzer Betriebsdauer führt.

Derartige piezoelektrische Antriebe sind bspw. in den Schriften EP-0.505.848 (fortan EP'848), EP-0,723,213 (fortan EP'213) und FR-2,277,458 (fortan FR'458), sowie der dazu äquivalenten Schrift DE 25 30 045 (fortan DE'045) offenbart.

EP'848 und EP'213 zeigen mehrteilige, zentral angeordnete piezoelektrische Resonatoren mit zwei bzw. drei Resonatorflügeln. Die Enden der Resonatorflügel weisen Stossflächen zum Anstossen von ringförmig aussenseitig um die Resonatoren angeordneten Rotoren auf. Nachteilig an diesen piezoelektrischen Antrieben ist der Abrieb an den Stossflächen der Resonatorflügel und den Auffangflächen der Rotoren sowie durch Lagerspiel der Rotoren. Der Abrieb hat einen hohen Verschleiss zur Folge, was die Lebensdauer der piezoelektrischen Antriebe verkürzt und ihr potentielles Einsatzgebiet einschränkt.

DE'045 (FR'458 entsprechend) beschreibt unterschiedlichste Anordnungen von elektrischen Motoren die auf piezoelektrischen Elementen beruhen. Diese Motoren weisen einen Ständer und einen Läufer auf, wobei mindestens einer von beiden einen Vibrator besitzt, der ein Piezoelement einschliesst. Der Ständer und der Läufer werden an einem auf der Oberfläche des Vibrators liegenden Punkt der Oberfläche mittels einem elastischen Element aneinander gedrückt um ein Moment zu übertragen. Ein Richtungswechsel erfolgt mittels einer Reversiereinrichtung, die dahingehend funktioniert, dass mehrere Vibratoren alternierend verwendet werden. In DE'045 wird erwähnt, dass es bei diesen Motoren mit einem Resonator unmöglich sei die Drehrichtung zu ändern. Eine Änderung der Drehrichtung erfordert zwei Vibratoren (bspw. Läufer und Stator aktiv). Nachteilig sind zudem die Schläge senkrecht zur Kontaktfläche zwischen Rotor und Stator. Es wird erwähnt dass der Verschleiss bei Motoren, insb. mit mehreren Drehrichtungen, sehr gross ist. Eine Umkehrung der Drehrichtung ist nur sehr aufwendig zu erreichen. Aufgrund der sehr schwierig herzustellenden Teile wird eine entsprechende Konstruktion sehr kostspielig.

DE 39 20 726 A1 zeigt einen Ultraschalloszillator mit piezoelektrischen Elementen und einem Resonator, der eine oder mehrere abgeschrägte Oberflächen aufweist, wobei am vorderen Ende des Resonators elliptische Schwingungen erzeugt werden. Der Ultraschalloszillator kann zum Antreiben eines Elementes, z.B. eines Rades, dienen, wobei dieses gemäss einigen Ausführungsformen der Erfindung durch eine Feder gegen den Ultraschalloszillator gepresst wird. Die Feder ist eine Scheibenfeder, und die Anpresskraft des angetriebenen Elementes gegen das vordere Ende des Resonators ist durch Verdrehen einer Mutter einstellbar. Der Motor ist gross, sowie aufwendig und teuer in der Herstellung.

EP 0 505 848 A1 offenbart einen Piezomotor für Uhrwerke, mit einem scheibenförmigen und kreissymmetrischen Resonator, der derart ausgeschnitten ist, dass zwei oder mehr Spitzen am Umfang des Resonators beim Schwingen des Resonators durch elliptische Bewegungen einen Ring von dessen Innenseite her antreiben. Um Ungenauigkeiten in der Zentrizität der Anordnung auszugleichen, ist der Resonator an seiner Mitte durch eine Spiralfeder befestigt. Der Abstand zwischen einander gegenüberliegenden Spitzen muss aber sehr genau auf den Innenradius des Ringes abgestimmt sein. Ein Verschleiss der Spitzen kann nicht kompensiert werden.

EP 0 963 033 A1 zeigt (Figur 10 und Abschnitte 110 bis 121, insbesondere Abschnitt 116) eine Vibrationsplatte mit daran angebrachtem Piezoelement, welches über einen Hebel einen Ring antreibt. Dabei ist der Hebel um eine elastische Einschnürung der Platte 11 drehbar. Der Hebel verstärkt dabei Bewegungen des Piezoelementes entsprechend dem Verhältnis der Abstände zwischen der Einschnürung und dem Piezoelement (Mitte) und der Antriebsstelle. Die Bewegung an der Antriebsstelle ist somit eindimensional, d.h. entlang einer einzigen Bewegungsrichtung um den Drehpunkt des Hebels. Der Motor weist nur eine Drehrichtung auf. Mit einer anderen Anregungsfrequenz ist die Vibrationsplatte zum Erzeugen eines Alarmtones einsetzbar.

US 5,410,206 offenbart einen in sich federnd ausgebildeten Aktuator, welcher durch ein Piezoelement angetrieben wird. Dabei werden zwei Klammerhälften, welche eine Schraube umfassen, gegeneinander verschoben. Es werden, um eine bestimmte Bewegungsrichtung zu erzielen, zuerst die beiden Klammerhälften langsam gegeneinander verschoben, wobei die Schraube mitgedreht wird. Anschliessend werden die Klammerhälften ruckartig zurückbewegt, wobei die Schraube aufgrund ihrer Trägheit nicht zurück bewegt wird.

EP 1 075 079 A1 zeigt einen Resonator aus parallelen Piezoelementen und Platten gezeigt. Eine Platte des Resonators ist über ein Halteteil befestigt. Das Halteteil ist an einer Platte montiert, und infolgedessen ein separates Bauteil. Damit ein Antrieb in zwei Richtungen möglich ist, weist eine besondere Ausführungsform der Erfindung mehrere Elektroden zur selektiven Anregung der Piezoelemente auf. Je nachdem, welche Elektroden angesteuert werden, treten unterschiedliche Schwingungsmodi auf, welche zu unterschiedlichen Drehrichtungen führen.

Es ist daher Aufgabe der vorliegenden Erfindung, einen piezoelektrischen Antrieb zu zeigen, der einen geringen Verschleiss aufweist, in beliebiger Grösse, insbesondere klein und flach und kostengünstig herstellbar ist. Der Antrieb soll robust im Betrieb, einfach in der Wartung und kräftig in der Leistung sein. Er soll einen breiten Drehzahlbereich in mehreren Drehrichtungen aufweisen und zudem eine einfache Positionsbestimmung ermöglichen. Dieser piezoelektrische Antrieb sollen mit gängigen Standards kompatibel sein.

Diese Aufgabe wird durch die Erfindung gemäss der Definition der Patentansprüche gelöst.

Piezoelektrische Antriebe basieren in der Regel auf Resonatoren, die in Schwingung versetzt werden. Diese wird wiederum auf einen anzutreibenden Körper übertragen. Die hier offenbarte Erfindung basiert auf der Erkenntnis, dass das Schwingverhalten eines piezoelektrisch angeregten Resonators durch gezielte Formgebung und Anordnung in longitudinaler als auch in transversaler Richtung beeinflusst werden kann. Ein in einem Mixmodus betriebener piezoelektrisch angetriebener Resonator erlaubt es, aufgrund seiner erfindungsgemässen Formgebung, einen Körper in Bewegung zu versetzen. Je nach Formgebung des Resonators und Anordnung eines oder mehrerer Resonators/en zu einem Körper sind vielfältige Ausführungsformen sowie Verwendungen möglich. Durch die spezielle Ausgestaltung können mehrere dominante Schwingungsformen angeregt werden. Durch die spezielle Formgebung ist es möglich, diese so zu wählen, dass die Drehrichtung u.a. abhängig von der Frequenz wählbar ist. Eine Beeinflussung der Rotationsgeschwindigkeit erfolgt vorteilhafter weise über die Höhe der Amplitude. Aufgrund der erfindungsgemässen Ausgestaltung des Resonators ist es zudem möglich schädliche Vibrationen, die den Verschleiss bewirken zu minimieren. Durch eine gezielte Anordnung wird erreicht, dass Abrieb sich nicht negativ auswirkt, resp. kompensiert wird. Der piezoelektrische Antrieb lässt sich zum uni- bzw. bidirektionalem Antreiben von Körpern, wie Wellen und Scheiben, mit nur einem Piezoelement verwenden. Im Gegensatz hierzu erfordern die aus dem Stand der Technik bekannten Anordnungen in der Regel mehrere Schwingquarz, die genau auf einander abgestimmt werden müssen.

In einer vorteilhaften Lösung sorgt eine longitudinale Schwingungskomponente des piezoelektrischen Resonators für ein Antreiben eines Körpers während eine transversale Schwingungskomponente des Resonators einen temporären Druck auf diesen Körper ausübt. Durch den somit erzeugten Druckwinkel können grosse Kräfte auf den anzutreibenden Körper übertragen werden. Der Antrieb weist bei Bedarf eine Selbsthemmung auf, so dass u.a. der Körper gehalten wird. Eine zusätzliche Lagerung der zu bewegenden Teile kann gezielt vermieden werden.

Der erfindungsgemässe piezoelektrische Antrieb weist ein anregendes Element und ein an dieses angekoppelten Resonator auf, der mit einem anzutreibenden Körper in Wirkverbindung steht. Das anregenden Element ist mit Vorteil zwischen zwei Teilen des Resonators angebracht und wirkt mittelbar auf den anzutreibenden Körper. Die durch das anregende Element induzierte Bewegung wird durch den Resonator transformiert und dann auf den anzutreibenden Körper übertragen. Der Resonator weist eine Masseverteilung auf die derart ausgestaltet ist, dass infolge einer anregenden Schwingung durch das anregende Element, abhängig von der Frequenz der anregenden Schwingung, der Resonator asymmetrisch in mehreren Richtungen zu schwingen beginnt. Diese Schwingungen werden über die Wirkverbindung auf den anzutreibenden Körper übertragen, so dass dieser in eine gerichtete Bewegung versetzen wird. Die Massenträgheit der schwingenden Elemente wird gezielt ausgenutzt, um voneilhafte Schwingungsformen zu erzeugen. Durch Anordnung und Ausgestaltung wird erreicht, dass die angeregten Bewegungsformen einen optimierten Antrieb bei minimalem Verschleiss und Materialbelastung erzielen. Mittels verstellbaren Elementen wird erreicht, dass allfällige Verschleisserscheinungen kompensiert und egalisiert werden. Die Resonatoren werden vorteilhafter Weise mit einer Frequenz angeregt, die einer Eigenfrequenz oder einem Vielfachen davon korrespondiert. Ein Resonator weist in der Regel mehrere unterschiedlich und asymmetrisch ausgestaltete Arme auf, die abhängig von der Frequenz der Anregung unterschiedlich schwingen. Durch die Materialwahl und die Masseverteilung wird ebenfalls Einfluss genommen.

Die Bewegungsform der Resonatoren wird so gewählt, dass hohe Resonanzfrequenzen und somit auch hohe Drehzahlen erreichbar sind. Im Unterschied zum Stand der Technik arbeitet der erfindungsgemässe Antrieb mit sehr hohen Frequenzen, wodurch auch die Piezoelemente klein gewählt werden können. Die Resonatoren sind derart aufgebaut, dass sie diese Schwingungsmodi zulassen. Der erfindungsgemässe Antrieb ist derart aufgebaut, dass er sehr robust ist und grosse Kühlfächen aufweist. Ein negatives, senkrechtes Anschlagen der Piezoelemente auf die Oberfläche des anzutreibenden Teils, insbesondere bevor der Antrieb zu wirken beginnt, wird gezielt vermieden. Die Masse und deren Verteilung des Resonators und dessen Anpresskraft spielen eine grosse Rolle. Um einen hohen Wirkungsgrad und ein grosses Drehmoment zu erreichen ist es wichtig, dass die antreibenden Elemente möglichst viel Arbeit wahrend der Zeit verrichten.

In einer bevorzugten Anordnung weist der Antrieb einen einzigen piezoelektrischen Resonator auf mit dem bidirektional angetrieben wird. Dies ermöglicht u.a. eine einfache Ansteuerung des Resonators und piezoelektrischen Antriebes über eine einzige Schwingung mit gleicher Frequenz und Phase. Um beispielsweise einen besonders kleinen Antrieb zu realisieren ist es möglich das piezoelektrische Element, das für die mechanische Anregung zuständig ist, als aktives Element in den Schwingkreis zu integrieren. Dadurch wäre es möglich bei einem Antrieb für ein Uhrwerk auf zusätzliche Schwingquarze zu verzichten. Entsprechende Anordnungen sind auch in der Medizinaltechnik besonders vorteilhaft.

Ein Verhältnis von Länge zu Breite des Erregers, im piezoelektrisch angetriebenen Resonator, gleich zwei oder einem Vielfachen davon, ist besonders günstig. Der anzutreibende Körper wird mit maximalen Amplituden angetrieben, was einen optimierten Wirkungsgrad des Antriebes zur Folge hat.

Der piezoelektrische Antrieb ist bei Bedarf mit Positioniermitteln versehen. Diese sind so ausgestaltet, dass sie ein von aussen messbares Signal verursachen. Beispielsweise kann über eine wechselnde Anpresskräfte des piezoelektrischen Antriebes eine Impedanzänderungen erzielt werden, die mess- und zählbar ist. Somit ist eine Positionsbestimmung des Körpers möglich, was eine Verwendung des Antriebes beispielsweise als Schrittmotor erlaubt. Auch in Uhren kann eine entsprechende Positionshilfe, z.B. zur Nullstellung der Zeiger, dienlich sein.

Der Resonator und das anregende Element werden mit Vorteil elastische gegenüber dem anzutreibenden Körper mittels einem elastischen Mittel gelagert. Dadurch werden beim Antreiben des Körpers auftretende Störungen kompensiert. Dies führt u.a. zu einer hohen Laufruhe des Antriebes. Auch wird allfälliger Verschleiss durch Abrieb an den Antriebsflächen und Auffangflächen kompensiert. Das elastische Mittel kann beispielsweise als Feder ausgebildet sein. Durch Materialwahl und Anordnung kann Einfluss auf das Feder- und/oder Dämpfungsverhalten genommen werden. Das elastische Mittel weist mit Vorteil zumindest in einer Richtung eine geringere Elastizität auf, als der wirkverbundene Resonator. Es ist insbesondere so ausgebildet, dass es keine Bewegungen (Schwingungen) ungewollt überträgt. Das elastische Element und der Resonator können auch einteilig und aus dem selben Material ausgebildet sein. Ihre Funktion wird dann durch die Ausgestaltung und Anordnung definiert. Das elastische Mittel kann ein oder mehrteilig sein. Geeignet sind beispielsweise Federn aus Metall oder Kunststoffelemente, die bspw. durch Spritzgiessen hergestellt werden.

Der piezoelektrische Antrieb lässt sich sehr flach konstruieren und als Rotationsmotor bzw. Linearmotor verwenden. Die unterschiedlichsten Verwendungen sind möglich. Beispielhafte Verwendungsgebiete sind Uhren, Kameras, Datenspeichern, Mikroskopie-Tische, Tachometern, usw..

Die Resonatoren, die in der Regel mittels piezoelektrischen Elementen angetrieben werden, können besonders vorteilhaft mittels Spritzgiessen hergestellt werden. Die Piezoelemente werden dabei z.B. in die Form gelegt und mittels Kunststoff umspritzt. Entsprechend ist es möglich eine elastische Lagerung zu integrieren. Eine andere Variante besteht darin, dass die Teile gepresst und/oder gesintert werden. Auch Kleben oder mechanische Verbindungen führen, abhängig von der Grösse des Antriebs, zum Erfolg.

Die Resonatoren sind vorteilhafter Weise einteilig ausgebildet und weisen eine Form auf, derart dass infolge der Masseverteilung und Anordnung geeignete Schwingungsmuster und Formen angeregt werden. Durch Materialwahl, Ausgestaltung und Lagerung sind die anzuregenden Schwingungsmuster frequenzabhängig einstellbar. Die Ausgestaltung wird so gewählt, dass abhängig von der Anregungsfrequenz unterschiedliche Schwingungsformen angeregt werden. Dies ermöglicht u.a. dass Richtungswechsel erzeugbar sind. Die Antriebsgeschwindigkeit wird bevorzugt über die Amplitude der Auslenkung eingestellt. Die Trägheit der Masse wird gezielt ausgenutzt. Dadurch ist es möglich bei einer gegebenen Anregungsfrequenz unterschiedliche Antriebsgeschwindigkeiten durch Variation der Amplitude zu fahren. Beim Antrieb einer Welle z.B. sind Drehzahlen von einigen wenigen bis zu einigen tausend Umdrehungen pro Minute möglich. Durch die Wahl der Lagerung, resp. Aufhängung des Resonators relativ zum anzutreibenden Körper, ist die Anpresskraft, das Haltemoment und weitere Grössen einstellbar. Der Resonator weist eine mittel- oder unmittelbare, aktive oder passive Wirkverbindung zum anzutreibenden Körper auf. Die Lagerung des Resonators gegenüber dem anzutreibenden Körper ist derart, dass Verschleiss und Ungenauigkeiten kompensiert werden.

Die Bewegung der schwingenden Teile eines erfindungsgemässen Antriebs können vereinfacht wie folgt beschrieben werden: Eine durch einen Erreger in einem Resonator hervorgerufene longitudinale Schwingung bewirkt abgeleitete Schwingungsmodi (z.B. die transversalen Modi). Diese stellen sich mit einer gewissen Verzögerung ein, da es u.a. aufgrund der Masseträgheit und der Elastizität des Materials eine gewisse Zeit braucht bis der Resonator in einen anderen Schwingungsmodus übergeht. Mit anderen Worten die Schallgeschwindigkeit in einem Resonator und den angrenzenden Bereichen bestimmt die Verzögerungszeit. Dadurch wird (beim Übergang von einem longitudinalen in einen transversalen Schwingungsmodus durch Überlagerung) eine Schwingungsform ähnlich einer Ellipse ausbildet. Ortsabhängig gibt es Bereiche am Resonator die mit unterschiedlicher "Orientierung", abhängig von Frequenz und Amplitude, schwingen. Werden entsprechende Bereiche z.B. mit einem Rotor in Wirkverbindung gebracht, wird eine Kraft auf diesen übertragen, sodass sich dieser entsprechend zu bewegen beginnt. Abhängig u.a. von der Grösse des Resonators und der Schallgeschwindigkeit wird ein erfindungsgemässer Antrieb typischer Weise mit einer anregenden Frequenz von 50 kHz bis 500 kHz betrieben (Bei entsprechender Dimensionierung sind auch andere Betriebszustände möglich).

Erreger können aus beliebigem, bekannten piezoelektrischen Materialien wie piezoelektrische Kristalle, Keramiken, Kunststoffe, usw. bestehen. Die Schwingkörper können aus beliebigem Werkstoff, wie Metall, Kunststoff. usw. bestehen. Die Verbindung des/der Erreger mit den Schwingkörpern erfolgt über bekannte kraft-, stoff- bzw. formschlüssige Mittel. Dem Fachmann stehen bei Kenntnis der vorliegenden Erfindung vielfältige Möglichkeiten der Verbindung vom Erreger mit den Schwingkörpern frei. Bspw. sind Erreger aus Keramik mit Schwingkörpern aus Metall mittels Komponentenkleber verklebt.

Vorteilhaft ist bei gewissen Ausführungsformen ein Verhältnis von Länge zu Breite des Erregers gleich zwei oder einem Vielfachen davon. Ein solches Verhältnis von Länge zu Breite gleich 2n (n=1, 2, 3, ...) führt zu besonders hohen Amplituden im Erreger.

Die Erfindung wird anhand der folgenden Figuren im Detail beschrieben.
- **Fig. 1**: zeigt eine erste Ausführungsform eines piezoelektrischen Antriebs mit einem Resonator und einer Kontaktstelle in einer perspektivischen Ansicht,
- **Fig. 2**: zeigt eine zweite Ausführungsform eines piezoelektrischen Antriebs mit einem Resonator und zwei Kontaktstellen in einer perspektivischen Ansicht,
- **Fig. 3**: zeigt eine dritte Ausführungsform eines piezoelektrischen Antriebs mit einem Resonator und zwei Kontaktstellen in einer perspektivischen Ansicht,
- **Fig. 4**: zeigt eine vierte Ausführungsform eines piezoelektrischen Antriebs mit einem Resonator und zwei Kontaktstellen in einer perspektivischen Ansicht,
- **Fig. 5**: zeigt eine fünfte Ausführungsform eines piezoelektrischen Antriebs mit drei Resonatoren und sechs Kontaktstellen in einer perspektivischen Ansicht,
- **Fig. 6**: zeigt eine Ausführungsform eines piezoelektrischen Antriebs für ein Uhrwerk mit zwei Zeigern in einer perspektivischen Ansicht
- **Fig. 7**: zeigt eine Ausführungsform eines piezoelektrischen Antriebs für eine Welle,
- **Fig. 8**: zeigt schematisch einen piezoelektrischen Antrieb,
- **Fig. 9**: zeigt eine weitere Ausführungsform eines piezoelektrischen Antriebs,
- **Fig. 10**: zeigt eine sandwichartige Anordnung des piezoelektrischen Antriebs gemäss Figur 9.

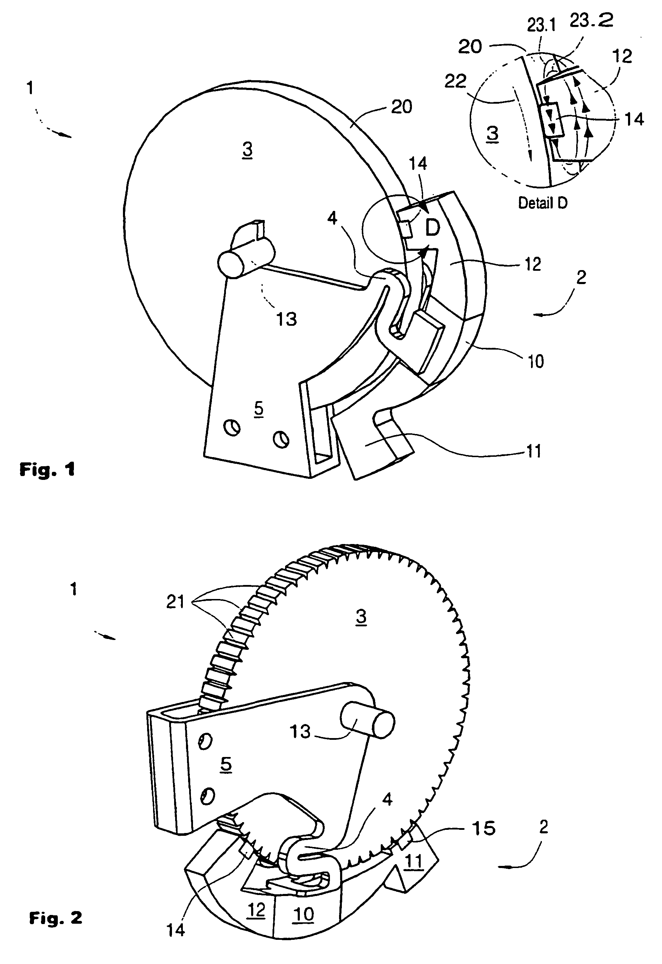

**Figur 1** zeigt schematisch und stark vereinfacht eine perspektivische Ansicht eines piezoelektrischen Antriebs 1 mit einem im Wesentlichen sichelförmigen Resonator 2, einem runden Rotor 3. einem Federelement 4 und einer Haltevorrichtung 5. Der Resonator 2 besteht hier aus einem Piezoelement 10 (anregendes Element) und zwei an diesem stirnseitigangebrachten Schwingkörpern 11, 12. Der Resonator 2 ist mittels dem Federelement 4 an der Haltevorrichtung 5 befestigt. Der Rotor 3 ist um eine Achse 13 an der Haltevorrichtung 5 drehbar gelagert. Der Resonator 2 steht über ein Kontaktelement 14 mit einer Fläche 20 des Rotors 3 in Wirkverbindung. Die Haltevorrichtung 5 und die Achse 13 hier sind hier durch Einschnappen verbunden. Durch Anlegen einer geeigneten Spannung am Piezoelement 10 wird dieses in Schwingung versetzt. Diese wird auf die angekoppelten Schwingkörper 11 und 12 übertragen. Durch die spezielle Ausgestaltung und Lagerung des Resonators 2 wird erreicht, dass die von Piezoelement 10 angeregten, mehrdimensionalen Schwingungen sich derart überlagern, dass das Kontaktelement 14 eine zyklische Antriebsbewegung ausführt, die abhängig von Frequenz und Amplitude auf die Fläche 20 des Rotors 3 übertragen wird. Der Resonator 2 ist derart ausgestaltet, dass sich die Bewegung des Kontaktelements 14 im wesentlichen parallel zur anzutreibenden Oberfläche erstreckt, ohne dieses zu beschädigen. Die Form der Bewegung des Kontaktelementes wird abhängig von der Ausgestaltung der Materialeigenschaften (E-Modul, Dichte, usw.), der Frequenz und Amplitude und der Lagerung, insb. des Rotors 3 eingestellt. Der Rotor 3 beeinflusst die Bewegung des Resonators 2. Dadurch ist es möglich abhängig von den Anforderungen eine optimale Lösung zu finden. Die Abhängigkeit von den verstellbaren Parametern geht soweit, dass die Richtung des Antriebs gezielt variierbar ist. Beispielsweise kann durch Veränderung der Frequenz die Bewegung des Kontaktelementes 14 derart geändert werden, dass die Drehrichtung des Rotors 3 ändert. Das Federelement 4 ist derart ausgestaltet, dass es sich an der Bewegung des Resonators 3 aktiv beteiligt. Die Lagerung des Resonators 2 gegenüber dem Rotor 3 ist so gewählt, dass Veränderungen wie allfälliger Abrieb und thermische Ausdehnungen kompensiert werden. Die Lagerung des Resonators kann auch aktiv ausgebildet werden, derart dass weitere Einflüsse nutzbar sind. Insbesondere wird die Lagerung mittels Dämpfung unterstützt, so dass die Schwingungsformen gezielt beeinflussbar sind.

Das Piezoelement 10 wird hier durch die beidseits, seitlich angebrachten Federelemente 4 angeregt indem eine elektrische Spannung angelegt wird. Es beginnt dadurch in Richtung der stirnseitig angebrachten Schwingkörper 11, 12 in einer ersten Schwingung und senkrecht zu diesen in einer zweiten Schwingung zu schwingen und bewirkt, dass der Resonator 2 in eine charakteristische Schwingung versetzt wird. Gleichzeitig überlagern sich Sekundärschwingungen. Das hier im Wesentlichen s-förmige Federelement 4 ist dabei so ausgebildet, dass es sich gegenüber der angeregten Schwingung neutral verhält und deren Übertragung auf den anzutreibenden Körper unterstützt. Das Federelement 4 ist hier zwischen dem Resonator 2 und der Haltevorrichtung (Chassis) 5 angeordnet und dient zur Halterung und Positionierung des Resonators 2. Das Federelement 4 ist derart ausgestaltet, dass es zumindest in einer Richtung eine erhöhte Flexibilität aufweist, so dass der Resonator in dieser bevorzugt bewegt werden kann. Der Resonator 2 ist im Wesentlichen sichelförmig ausgestaltet und weist an definierten Stellen Massekonzentrationen auf. Die Ausgestaltung des Resonators 2 (inkl. dem anregenden Element 10) bewirkt die bevorzugte Antriebsbewegung.

In Detail D sind die Bewegung des Kontaktelementes stark vereinfacht dargestellt. Die sich infolge der mehrdimensional überlagernden Schwingungen des antreibenden Piezoelementes 10 und durch die Ausgestaltung der Schwingkörper 11 und 12 einstellende Bewegung ist schematisch durch ein Pfeil 23.1 verdeutlicht. Die Geschwindigkeit des Kontaktelementes 14 variiert abhängig vom Ort und der Amplitude der anregenden Schwingung. Durch eine Änderung der Amplitude der anregenden Schwingung wird die Geschwindigkeit eingestellt. Eine sich infolge einer kleineren Amplitude einstellende Schwingung ist schematisch durch ein Pfeil 23.2 dargestellt.

Die Bewegung des Resonators um die Achse 13 ist schematisch durch ein Pfeil 20 dargestellt.

Bei der hier gezeigten Anordnung lässt sich der Rotor 3 sehr einfach einklinken. Er wird durch den über das Federelement 4 positionierten Rotor 2 festgehalten.

Figur 2 zeigt schematisch und stark vereinfacht eine weitere Ausführungsform eines Antriebs 1. Die einzelnen Teile entsprechend weitgehend denen von Figur 1, weshalb diese nicht nochmals im Detail erläutert werden. Der gekrümmte Resonator 2 weist neben einem piezoelektrischen Element 10, zwei t-, resp. 1-förmig ausgebildete Schwingkörper 11, 12 auf, die stirnseitig an das piezoelektrische Element 10 anschliessen und je ein Kontaktelement 14, 15 aufweisen. Diese Kontaktelemente 14, 15 stehen in Wirkverbindung mit der Fläche 20 des Rotors 3. Das hier s-förmige Federelement 4 ist an einer dem Rotor 3 zugewendeten Seite des Piezoelements 10 angebracht. Es dient als elastische Halterung des Resonators 2 gegenüber der Haltevorrichtung (Chassis) 5 und zur Übertragung der Reaktionskräfte die aufgrund der auf den Resonator 2 übertragenen Antriebsbewegung entstehen. Das Federelement 4 ist so ausgestaltet, dass es die Wirkverbindung zwischen den Kontaktelementen 14, 15 und dem Rotor 3 garantiert. Das Federelement 4 weist eine erhöhte

Die Anregung des Piezoelements 10 mit einer Versorgungsspannung erfolgt hier über separate Anschlüsse (nicht näher dargestellt). Das Piezoelement beginnt dadurch in Richtung der stirnseitig angebrachten Schwingkörper 11. 12 und senkrecht dazu zu schwingen.

Der Rotor 3 weist entlang seinem Umfang Elemente, hier in Form von beabstandeten Vertiefungen 24, auf. Diese Elemente 24 dienen hier zur Erzeugung eines Zählimpulses, so dass die Position des Rotors feststellbar ist. Die Elemente 24 sind derart ausgestaltet, dass vorzugsweise im Resonator 2, bspw. im piezoelektrischen Element 10, eine Veränderung einer messbaren Grösse, hervorgerufen wird. Bei dieser kann es sich um eine Impedanzänderung handeln, die von aussen festgestellt und analysiert werden. Anstelle der Vertiefungen sind auch andere Mittel denkbar zu einem äquivalenten Resultat führen (bspw. spez. Formen des Resonators). Die Positioniermittel 24 sind so ausgestaltet, dass sie die Funktionsweise des Antriebs nicht negativ beeinträchtigen und dass durch die Veränderung einer messbaren Grösse, insb. von Impedanzänderungen, die Position eines Körpers (3) bestimmbar ist. Das maximale Antriebsmoment kann durch die Dimensionierung der Teile bestimmt werden. Wird bspw. der Durchmesser des Rotors 3 vergrössert, nimmt das Antriebsmoment zu. Das Haltemoment ist mittels dem Element 4 und über die Reibung einstellbar. Zusätzliche Elemente zum Vergrössern des Halte- oder Antriebsmoments sind bei Bedarf möglich. Der Antrieb 1 kann beispielsweise auch mit einem Getriebe gekoppelt sein, um speziellen Anforderungen gerecht zu werden.

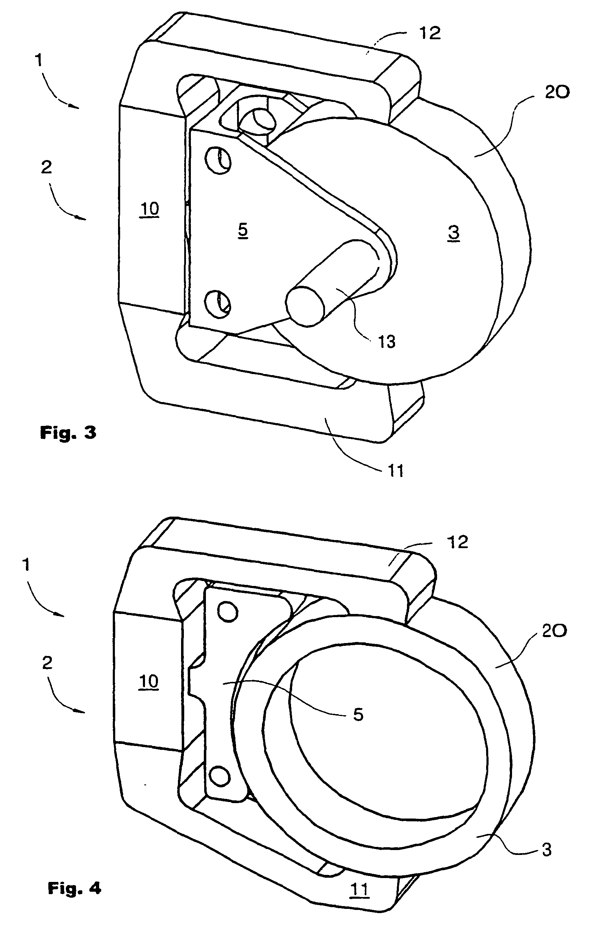

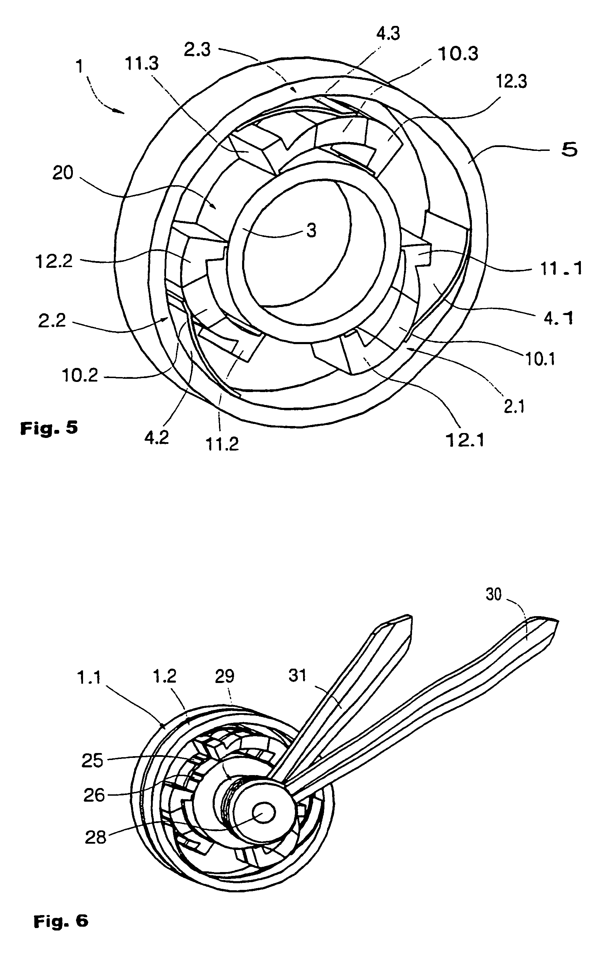

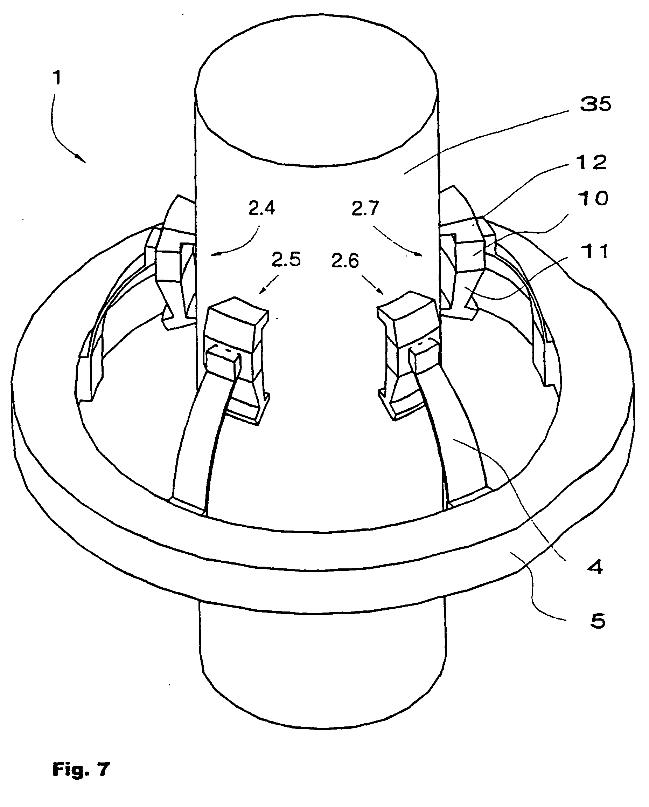

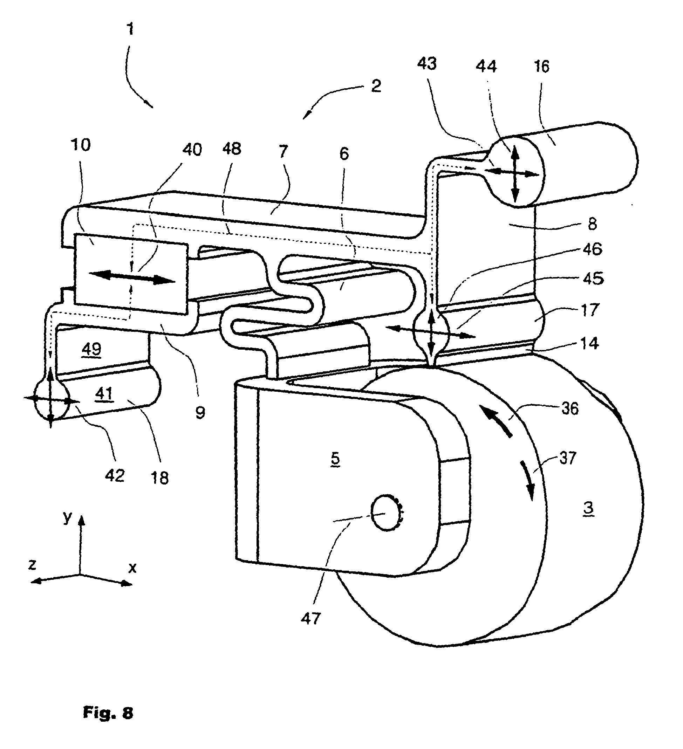

Figur 3 zeigt eine weitere Ausführungsform des Antriebs 1. Der Antrieb weist einen annähernd u-förmigen Resonator 2 mit zwei unterschiedlich dicken Schwingkörpern 11. 12 auf, die stirnseitig an einem Piezoelement 10 angeschlossen sind. Die Schwingkörper stehen mit einer Mantelfläche 20 eines Rotors 3 in Wirkverbindung, indem sie mit dieser seitlich, im Wesentlichen tangential, in Berührung stehen. Der Resonator 2 ist an einer Haltevorrichtung 5 befestigt, so, dass dessen Antriebsbewegung nicht negativ behindert wird. Mit der Art und Weise der Befestigung wird auf die Schwingform des Resonators 2 Einfluss genommen werden. Das Piezoelement 10 wird hier, anhängig vom verwendeten Typ, entweder im Bereich der Stirnseiten oder an den freien Seitenflächen angeregt, so dass es in Richtung der stirnseitig angebrachten Schwingkörper zu schwingen beginnt. Aufgrund der Ausgestaltung und Anordnung des Resonators 2 überlagern sich Sekundärbewegungen, welche in einer gerichteten Antriebsbewegung resultiert.

Der Rotor drei ist um eine Achse 13 drehbar an der Haltevorrichtung 5 gelagert. Die Welle 13 ist in der hier gezeigten Ausführungsform im Zentrum des Rotors 3 angeordnet. Die Anzahl der Schwingkörper 11. 12 ist nicht auf zwei beschränkt und wird den Anforderungen gerecht bestimmt. Abweichend von den hier dargestellten Ausführungsformen sind auch Lösungen denkbar, bei denen z.B. mehr als ein Rotor 3 antreibbar ist. Es sind auch Resonatoren 2 mit mehr als einem Erreger und mit mehr als zwei Schwingkörpern 11, 12 realisierbar. Bspw. besteht der Resonator 2 aus einer Vielzahl von Erregern bzw. Schwingkörpern 11, 12, die in einer Multilayeraufbau vorliegen.

Die Schwingkörper 11, 12 sind so ausgestaltet, dass sie frequenzabhängig den Rotor 3 antreiben. Die Geschwindigkeit wird vorteilhafter weise über die Amplitude bestimmt. Dem Fachmann ist es bei Kenntnis der hier offenbarten Erfindung möglich entsprechende Lösungen zu finden. Bei anderen Ausführungsformen kann die Achse 13 derart exzentrisch gegenüber dem Rotor 3 angeordnet sein, dass im Piezoelement 10 eine positionsabhängige messbare Veränderung hervorgerufen wird. Die Form des Rotors 3 ist nicht zwingend kreisrund, sondern kann z.B. oval ausgestaltet sein, um eine entsprechende Veränderung hervorzurufen. Das Piezoelement 10 kann auch über mehr als ein Anschlusspaar für die Anregung von Schwingungen verfügen. Die hier als ortsfest ausgebildeten Teile können selbstverständlich auch beweglich angeordnet werden. Entsprechendes gilt für die beweglichen Teile. Bspw. ist es möglich die Resonatoren auch in einen Rotor zu integrieren, resp. nicht ortsfest anzuordnen.

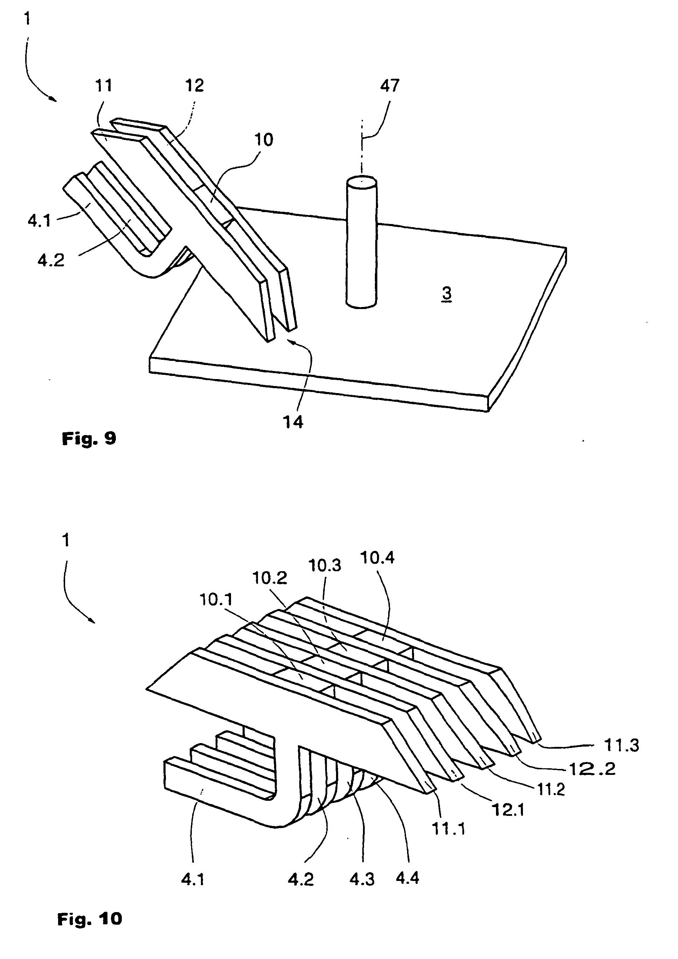

**Figur 4** zeigt schematisch und stark vereinfacht eine weitere Ausführungsform des Antriebs 1. Ein Rotor 3 ist hier als ringförmiger Hohlläufer ausgebildet und nur durch zwei unterschiedlich lange Schwingkörper 11, 12 gelagert, welche im Kontaktbereich im Wesentlichen tangential zu diesem verlaufen. Die Schwingkörper 11, 12 sind stirnseitig an zwei gegenüber liegenden Flächen eines Piezoelement 10 angebracht und bilden zusammen mit diesem einen u-förmigen Resonator 2. Eine Haltevorrichtung 5 ist hier mit dem Resonator 2 wirkverbunden und dient zu dessen Lagerung. Die Schwingkörper 11, 12 sind derart ausgebildet, dass sie infolge einer mechanischen Anregung durch das Piezoelement 10 und in Verbindung mit dem Rotor 3 antizyklisch schwingen. Die Schwingkörper 11, 12 weisen gegenüber dem Rotor 3 eine gewisse Vorspannung auf, wodurch dieser gehalten und die Antriebsbewegung auf übertragen wird. Longitudinale Schwingungskomponenten im Resonator 2 treiben den Rotor 3 tangential an, transversale Schwingungskomponenten üben u.a. e i-nen haltenden und zentrierenden Druck auf den Rotorkörper aus. Der Rotor 3 wird durch elastische Mittel gehalten. Grosse Haltekräfte sind möglich, so dass keine weiteren bspw. externen Lager zum Lagern notwendig sind. Das übermittelte Drehmoment kann sehr gross sein, da der Schrittwinkel des Rotorkörpers pro Schwingung sehr klein ist. Bspw. beträgt der Schrittwinkel 0.01°.

**Figur 5** zeigt schematisch und stark vereinfacht einen Antrieb 1 mit drei gekrümmten Resonatoren 2.1, 2.2. 2.3. Es handelt sich bei dieser Ausführungsform im Wesentlichen um die Parallelschaltung von drei Resonatoren gemäss Figur 2, wodurch eine Erhöhung der Antriebsleistung erreicht wird. Die drei Resonatoren 2.1. 2.2, 2. 3 weisen hier alle je ein Piezoelement 10.1. 10.2, 10.3 auf, das stirnseitig an zwei im wesentlich parallel gegenüberliegenden Seiten mit je einem Schwingelement 11.1, 11.2, 11.3, 12.1, 12.1. 12.3 verbunden ist. Die Schwingelemente sind hier gekrümmte und 1-förmig ausgestaltet, so dass sie eine Masseverteilung aufweisen, welche zum gewünschten Schwingverhalten führt. Bei den drei Resonatoren handelt es sich hier um drei funktional unabhängige Antriebe.

Die Resonatoren 10.1, 10.2, 10.3 sind mittels Federelementen 4.1, 4.2, 4.3 an einer hier ringförmigen Haltevorrichtung 5 federnd befestigt. Ein hier ringförmiger Rotor 3 wird durch die Resonatoren 2.1, 2.2, 2.3 zentrisch gelagert. Durch eine Anregung beginnen die Piezoelemente 10.1, 10.2, 10.3 und die mit ihnen wirkverbundenen Schwingkörper mehrdimensional zu schwingen. Diese Schwingungen überlagern sich und werden auf den Rotor 3 übertragen, wodurch dieser in Bewegung versetzt wird. Aufgrund der u.a. kompensierend wirkenden Lagerung durch die Federelemente 4.1. 4.2. 4.3 werden Spiel und Abrieb vermieden. Die Federelemente 4.1, 4.2, 4.3 sind derart ausgebildet, dass sie u.a. negative Schwingungen dämpfen, resp. sich diese nicht negativ auf andere Bauteile auswirken. Durch die hier gezeigte elastische Lagerung des Rotors 3 ist der Antrieb besonders unempfindlich gegen stossartige Belastungen.

Figur 6 zeigt zwei hintereinander angeordnete Antriebe 1.1, 1.2 gemäss Figur 5. Diese dienen hier beispielhaft zum Antreiben von zwei Zeigern 30, 31, so wie sie in Uhren, insb. Armbanduhren, oder anderen Anzeigegeräten zum Einsatz kommen. Der erste Antrieb 1.1 weist eine Achse 28 auf, die durch den zweiten Antrieb 1.2 hindurchragt und zur Lagerung des ersten Zeigers 30. Der zweite Antrieb 31 weist eine entsprechend durchgängig ausgebildete Achse 29 auf, die zur Lagerung des zweiten Zeigers 31 dient. Durch die hier gezeigte Anordnung sind zwei Zeiger, wie sie beispielsweise in Uhren vorkommen unabhängig ansteuerbar. Durch die Ausbildung des Antriebes sind kein Getriebe und keine anderen mechanischen Teile erforderlich. Die Zeiger sind zudem gegen Stösse und andere mechanische Belastungen geschützt. Die Antriebe sind sehr klein ausführbar. Aufgrund der flachen Bauweise ist es möglich sie hintereinander an zu ordnen. Sie weisen untereinander keine negativen Einflüsse und Störungen auf. Aufgrund der sehr hohen Schwingfrequenz ist der Antrieb praktisch geräuschlos. Zwei Vertiefungen 25, 26 dienen hier als Positioniermittel von zwei Rotoren 3.1, 3.2 auf. Die Vertiefungen 25, 26 sind derart ausgebildet, dass sie in einem oder in allen Resonatoren 2.1, 2.2. 2.3 eine messbare Veränderung vorzugsweise im Verhalten der Piezoelemente 10.1, 10.2, 10.3 hervorrufen. Diese ist von aussen messbar und dient zum Positionieren der Zeiger 30, 31. Anstelle der Vertiefungen 30, 31 können auch andere Positioniermittel verwendet werden. Beispielsweise ist die Form der Resonatoren 3.1, 3.2 entsprechend wählbar.

Figur 7 zeigt schematisch und stark vereinfacht eine weitere Ausführungsform eines Antriebs 1. Der Antrieb 1 wirkt hier auf eine Welle 35. Resonatoren 2.4, 2.5, 2.6, 2.7 sind um die Welle 35 angeordnet und stehen mit dieser in Wirkverbindung. Die Resonatoren 2 sind mittels Federelementen 4 an einer hier ringförmigen Haltevorrichtung 5 befestigt und weisen je ein Piezoelement 10 mit zwei angekoppelten Schwingkörpern 11, 12 auf. Die Resonatoren 2 sind hier im Wesentlichen parallel geschaltet und würden auch als funktionell unabhängige Antriebe arbeiten. Durch die parallele Anordnung wird eine Erhöhung der Leistung erreicht. Durch die Veränderung der Anregungsfrequenz wird auf die Richtung der Bewegung Einfluss genommen. Über die Amplitude der anregenden Schwingung wird die Geschwindigkeit gesteuert. Durch entsprechend angeordnete Resonatoren (nicht näher dargestellt) ist es auch möglich neben einer axialen Verschiebung, eine Verschiebung in Umfangsrichtung zu erzielen. Die Anzahl und Anordnung der Resonatoren 2 ist nicht fix und kann den Anforderungen gerecht optimiert werden. Bei Bedarf ist es auch sinnvoll mehrere Resonatoren in unterschiedlicher Richtung vorzusehen, so dass eine Richtungsunabhängigkeit erzielt wird.

Elektrischen Anschlüsse für die Speisespannung sind aus Gründen der Übersichtlichkeit in den Figuren nicht eingezeichnet. Bei Verwendung von elektrisch leitenden Resonatorelementen wie bspw. Metall können die Resonatorelemente selbst die elektrischen Anschlüsse bilden. Durch Anlegen einer elektrischen Wechselspannung wird ein Resonator zu mechanischen Schwingungen angeregt. Bspw. wird ein Resonator mit einer sinusförmigen Wechselspannung von 0.1 V und bei einer Frequenz 200 kHz angeregt. Dies ermöglicht die Verwendung vom Resonator und von bspw. im Multilayeraufbau angeordneten Erregern in batteriebetriebenen Geräten wie bspw. in Uhren. Aufgrund der erfindungsgemässen Form des Resonators breiten sich die mechanischen Schwingungen im Resonator unterschiedlich aus. Dies führt zu sich überlagernden longitudinal- als auch transversal Schwingungen.

**Figur 8** zeigt stark vereinfacht ein schematischesFunktionsmodell eines erfindungsgemässen Piezomotors 1. Der hier gezeigte Motor 1 weist einen Resonator 2 auf, an dem ein Piezoelement 10 angekoppelt ist. Das Piezoelement 10 dient als Erreger und steht in Wechselwirkung mit dem Resonator 2, resp. ist ein Teil davon. Ein elastisches Element 6, hier in der Form einer mehrfach gekrümmten, in einer Richtung dünnen Feder, dient zur Lagerung des Resonators 2 gegenüber einer Haltevorrichtung 5. Das elastische Element 6 ist derart ausgebildet, dass es gegenüber Bewegungen parallel zu einer x/y-Ebene bevorzugt elastisch ist. Allfälliger Abrieb und Spiel, sowie ungewollte Ausdehnungen werden so kompensiert. Der Resonator 2 weist eine asymmetrische Masseverteilung auf. Der Verständlichkeit halber wird dies hier vereinfacht durch Bereiche 10, 16, 17, 18 mit Massekonzentrationen verdeutlicht (Das Piezoelement 10 stellt hier ebenfalls ein Bereich mit Massekonzentration dar welcher die Form der angeregten Schwingungen beeinflusst). Die Bereiche mit Massekonzentration 10. 16. 17, 18 sind über Übertragungsbereiche 7, 8, 9, deren Masse und Tragheit in diesem Modell als vernachlässigbar angenommen wird, wirkverbunden. Die Übertragungsbereiche 7, 8. 9 sind hier in z-Richtung dicker ausgestattet. Dadurch wird erreicht, dass sich der Resonator bevorzugt in der x/y-Ebene bewegt.

Die Wirkverbindungen, schematisch dargestellt durch Pfeile 48, 49, zwischen den Bereichen mit Massekonzentration 10. 16, 17, 18, sind so dass sich die Bewegungen der Bereiche mit Massekonzentrationen 10, 16, 17, 18 gezielt überlagern und beeinflussen. Der Resonator schwingt hier wie schon oben erwähnt bevorzugt in der x/y-Ebene Sekundärschwingungen sind möglich. Insbesondere die Trägheit der Massen, die Elastizität des Materials, die Dämpfung und die Schallgeschwindigkeit spielen eine signifikante Rolle. Der Resonator 2 weist als ganzes bevorzugte Schwingungsformen auf. Die Bereiche mit Massekonzentration 10, 16, 17, 18 sind derart angeordnet, dass eine Schwingung, die in einer Richtung angeregt wird, zur Folge hat, dass eine Schwingung in einer anderen Richtung angeregt werden. Durch dieses Wirkprinzip wird erreicht, dass mittels einem anregenden Piezoelement 10 mehrere Antriebsrichtungen erzeugbar sind. Die Richtung der anregenden Schwingung wird gezielt ausgenutzt, indem das Piezoelement entsprechend seiner Vorzugsrichtung angeordnet wird. Zudem wird erreicht, dass sich als Gesamtheit charakteristische (stehende) Schwingungsformen ausbilden, die mit der Frequenz und der Amplitude der Anregung gezielt einstell- und veränderbar sind so dass sie in einer antreibenden Bewegung resultieren. Diese antreibende Bewegung ist ortsabhängig und wird hier mittels einem geeignet angeordneten Kontaktelement 14 gezielt auf einen anzutreibenden Rotor 3 übertragen. Die Antriebsrichtungen des Rotors werden schematisch durch Pfeile 36. 37 dargestellt. Das Lagerelement 6 ist derart ausgestaltet, dass es die Schwingungsformen des Resonators 2 unterstützt oder zumindest nicht negativ beeinflusst. Spiel und Abrieb werden bei einer solchen Anordnung kompensiert. Die Bewegungen des Resonators 2 sind hier der Einfachheit halber auf die Bereiche mit Massekonzentration beschränkt mittels Pfeilen 40, 41, 42, 43, 44, 45, 46 schematisch und stark verallgemeinert dargestellt. Pfeil 40 stellt schematisch die anregende Schwingung dar. Die sich effektiv einstellende resultierende Bewegung (Überlagerung der Bewegungen dargestellt durch die Pfeile 40, 41, 42, 43, 44, 45, 46) wird durch die Ausgestaltung (insb. Masseverteilung) des Resonators 2 und dessen Lagerung, resp. Dämpfung bestimmt. Die antreibende Bewegung des Resonators 2 ist über die anregende Frequenz derart einstellbar, dass die Antriebsrichtung gewechselt werden kann. Der Resonator 2 ist derart ausgestaltet, dass durch eine Erhöhung oder eine Erniedrigung der anregenden Frequenz eine andere Schwingungsform (kann in gewissen Fällen auch mit stehenden Wellen verglichen werden) einstellbar ist, so dass sich die Antriebsbewegung des Kontaktelementes 14 ändert. Die Wirkverbindung zwischen dem Kontaktelement 14 und dem Rotor 2 ist so gewählt, dass sie die Bewegung des Rotors nicht negativ beeinflusst. Der Resonator und die angrenzenden Teile werden bei Bedarf einteilig hergestellt. Wie in den oben beschriebenen Ausführungsformen dargestellt, ist es möglich mehr als ein antreibender Berührungspunkt zwischen dem Resonator 2 und dem anzutreibenden Körper zu realisieren. Eine entsprechend günstige Ausgestaltung des Resonators 2 ermöglicht dies. Durch entsprechende Wahl der Masseverteilung und Interaktion treiben mehrere Kontaktbereiche des Resonators 2 den Rotor 3 in der selben Richtung an. Durch eine geeignete Einstellung der anregenden Frequenz wird die Richtung des Antriebs bestimmt. Durch die Amplitude der anregenden Schwingung lässt sich die Geschwindigkeit gezielt einstellen. Bei Kenntnis der hier offenbarten Erfindung ist es dem Fachmann möglich alternative Anordnungen und Ausgestaltungen von Resonatoren entsprechend zu schaffen.

**Figur 9** zeigt stark vereinfacht und schematisch eine weitere Ausführungsform eines piezoelektrischen Antriebs 1. Zu erkennen sind ein Piezoelement 10 das zwischen zwei flachen, im Querschnitt pyramidenstumpfartigen Schwingkörpern 11, 12 angekoppelt ist. Die Schwingkörper 11, 12 sind hier nicht mehr stirnseitig am Piezoelement 10 angebracht, sondern seitlich von diesem. Der Resonator 2 ist über Federelemente 4.1. 4.2 gelagert (Die andere Seite der Lagerung ist nicht näher dargestellt). Die Schwingkörper sind hier mit einem Rotor 3 in Wirkverbindung, der um eine Achse 47 drehbar gelagert ist. Die beiden Schwingkörper 11, 12 sind elektrisch leitend ausgebildet und dienen zur Ansteuerung des Piezoelements 10. Die Schwingungen des Piezoelements 10 in Längsrichtung und senkrecht dazu, werden auf die Schwingkörper 11, 12 übertragen. Die Schwingkörper beeinflussen und transformi e-ren dieser Bewegungen und übertragen sie auf den Rotor 3. derart, dass sich dieser um die Achse 47 dreht. Dieser Antrieb eignet sich auch als Linerantrieb.

**Figur 10** zeigt eine mögliche Anordnung von Schwingkörpern 11.1, 11.2, 11.3. 12.1, 12.2 und Piezoelementen 10.1, 10.2, 10.3. 10.4 gemäss Figur 9. Die Schwingkörper 11.1, 11.2, 11.3, 12.1, 12.2 und die Piezoelemente 10.1, 10.2, 10.3, 10.4 sind hier abwechslungsweise parallel angeordnet und unterstützen sich gegenseitig in ihrer Wirkung. Durch eine solche Anordnung werden die übertragbaren Kräfte vergrösscrt. Bei einer Parallelschaltung ist, im Unterschied zum Stand der Technik, in der Regel keine separate Ansteuerung jedes Piezoelements erforderlich. Dadurch kann der Motor mit geringem Aufwand betrieben werden.

## Patentansprüche

1. Piezoelektrischer Antrieb (1) mit einem anregenden Piezoelement (10) und einem an dieses angekoppelten Resonator (2), der mit einem anzutreibenden Körper (3) in Wirkverbindung steht, wobei der Resonator (2) gegenüber dem anzutreibenden Körper (3) durch ein Federelement (4, 6) gelagert ist und eine Masseverteilung derart ausgestaltet aufweist, dass infolge einer anregenden Schwingung durch das Piezoelement (10), abhängig von der Frequenz der anregenden Schwingung, der Resonator (2) in mehrere Richtungen (x,y,z) schwingt und diese Schwingungen über die Wirkverbindung den anzutreibenden Körper (3) in eine gerichtete Bewegung versetzen,**dadurch gekennzeichnet, dass** der Resonator (2) über ein am Resonator (2) angebrachtes Federelement (4, 6) gelagert ist, wobei das Federelement (4, 6) am Resonator (2) angeformt ist, also der Resonator (2) und das Federelement (4, 6) einteilig ausgebildet sind.

2. Piezoelektrischer Antrieb (1) gemäss Anspruch 1, **dadurch gekennzeichnet, dass** der Resonator (2) und das Federelement (4, 6) eine elektrische Verbindung zur Anregung des Piezoelementes bilden.

3. Piezoelektrischer Antrieb (1) gemäss einem der vorangehenden Patentansprüche, **dadurch gekennzeichnet, dass** der Resonator (2) aus einem Piezoelement (10) und einem damit wirkverbundenen Schwingkörper (11, 12) besteht.

4. Piezoelektrischer Antrieb (1) gemäss Anspruch 3, **dadurch gekennzeichnet, dass** der Schwingkörper (11, 12) aus elektrisch leitendem bzw. abriebsfestem bzw. thermisch leitendem Material sind.

5. Piezoelektrischer Antrieb (1) gemäss einem der vorangehenden Patentansprüche, **dadurch gekennzeichnet, dass** der Resonator (2) eine asymmetrische Form auf weist und sowohl in einem longitudinalen- als auch in einem transversalen Modus zum Schwingen bringbar ist.

6. Piezoelektrischer Antrieb (1) gemäss einem der vorangehenden Patentansprüche, **dadurch gekennzeichnet, dass** der piezoelektrische Antrieb (1) nur ein Piezoelement (10) aufweist.

7. Piezoelektrischer Antrieb (1) gemäss einem der vorangehenden Patentansprüche, **dadurch gekennzeichnet, dass** mehrere Piezoelemente (10.1, 10.2, 10.3) parallel zueinander geschaltet sind.

8. Piezoelektrischer Antrieb (1) gemäss einem der vorangehenden Patentansprüche, **dadurch gekennzeichnet, dass** das elastische Mittel (4, 6) bezüglich der Federwirkung so ausgestaltete ist, dass eine Herabsetzung von Verschleiss zwischen dem Resonator und dem Antrieb bewirkt wird.

9. Piezoelektrischer Antrieb (1) gemäss einem der vorangehenden Patentansprüche, **dadurch gekennzeichnet, dass** das Piezoelement (10) Seitenflächen und mindestens eine Stirnfläche aufweist, welche Seitenflächen mit einem Element (4) elektrisch leitend verbunden sind und welche Stirnfläche mit einem Resonator (2) wirkverbunden ist, derart, dass das Piezoelement (10) durch Anlegen einer elektrischen Spannung an den Seitenflächen zum Schwingen in Richtung der Stirnflächen angeregt und der wirkverbundene Resonator (2) zum Schwingen angeregt wird.

10. Piezoelektrischer Antrieb (1) gemäss einem der vorangehenden Patentansprüche, **dadurch gekennzeichnet, dass** die Geschwindigkeit des angetriebenen Körpers (3) durch die Amplitude des anregenden Piezoelementes (10) einstellbar ist.

11. Piezoelektrischer Antrieb (1) gemäss einem der vorangehenden Patentansprüche, **dadurch gekennzeichnet, dass** die Richtung der Bewegung des angetriebenen Korpers (3) durch die Frequenz des anregenden Piezoelementes (10) einstellbar ist.

12. Piezoelektrischer Antrieb (1) gemäss einem der vorangehenden Patentansprüche, **dadurch gekennzeichnet, dass** der Resonator (2) gegenüber dem anzutreibenden Korper (3) mehrere Wirkverbindungen (14) aufweist.

13. Piezoelektrischer Antrieb (1) gemäss einem der vorangehenden Patentansprüche, **dadurch gekennzeichnet, dass** der anzutreibende Körper (3) ein Rotor (3) oder ein Linearantrieb ist.

14. Piezoelektrischer Antrieb (1) gemäss einem der vorangehenden Patentansprüche, **dadurch gekennzeichnet, dass** ein Positioniermittel (24) eine Veränderung einer messbaren Grösse, insbesondere einer Impedanz- oder Phasenänderungen, erzeugt, derart dass eine Position eines Körpers (3) bestimmbar ist.

15. Verfahren zum Antreiben eines Körpers, in welchem ein piezoelektrisches Element (10) in eine erste und/oder eine zweite Schwingung versetzt wird, dass diese erste und/oder zweite Schwingung auf einen wirkverbundenen Resonator (2) Übertragen wird, wobei dieser Resonator (2) gegenüber dem anzutreibenden Körper (3) durch ein Federelement (4, 6) gelagert ist, dass er in eine mehrdimensionale Schwingung versetzt wird, wobei sich in bestimmten Zonen des Resonators (2) eine charakteristische, insbesondere elliptische Bewegung ausbildet und dass diese charakteristische Bewegung auf einen anzutreibenden Körper (3) übertragen wird, so dass dieser in eine gerichtete Bewegung versetzt wird, **dadurch gekennzeichnet, dass** der Resonator (2) über ein am Resonator (2) angebrachtes Federelement (4, 6) gelagert wird, wobei das Federelement (4, 6) am Resonator (2) angeformt ist, also der Resonator (2) und das Federelement (4, 6) einteilig ausgebildet sind.

16. Verfahren gemäss Anspruch 15, **dadurch gekennzeichnet, dass** die Geschwindigkeit des angetriebenen Körpers (3) durch die Amplitude des anregenden Piezoelementes (10) eingestellt wird.

17. Verfahren gemäss Anspruch 15, **dadurch gekennzeichnet, dass** die Richtung der Bewegung des angetriebenen Körpers (3) durch die Frequenz des anregenden Piezoelementes (10) eingestellt wird.

18. Verwendung eines Antriebes (2) gemäss einem der Ansprüche für den piezolelektrischen Antrieb, derart, dass er schrittweise bzw. kontinuierlich Teile in Uhren, Kameras, Datenspeichern, Mikroskopie-Tischen bzw. Tachometern in Bewegung setzt.

## Claims

1. Piezoelectric drive (1) with an excitation piezoelement (10) and a resonator (2) which is coupled to this and which is in interactive connection with a body (3) to be driven, wherein the resonator (2) is mounted via a means (4, 6) attached to the resonator and acting elastically with respect to the body (3) to be driven, and has a mass distribution designed in a manner such that as a result of an excitation oscillation by the piezoelement (10), dependent on the frequency of the excitation oscillation, the resonator (2) oscillates asymmetrically in several directions (x, y, z) and these oscillations via the interactive connection displace the body (3) to be driven in a directed movement, **characterized in that** the resonator (2) is mounted via a spring element (4, 6) attached to the resonator (2), wherein the spring element (4, 6) is formed as part of the resonator (2) i.e. the resonator (2) and the spring element (4, 6) are designed as one piece.

2. Piezoelectric drive (1) according to claim 1, **characterized in that** the resonator (2) is elastically mounted by an integrally formed spring element (4, 6) and this element forms the electrical connection for excitation of the piezoelement.

3. Piezoelectric drive (1) according to one of the preceding patent claims, **characterized in that** the resonator (2) consists of a piezoelement (10) and an oscillation body (11, 12) which is interactively connected thereto.

4. Piezoelectric drive (1) according to claim 3, **characterized in that** the oscillation body (11,12) is of electrically conducting material or abrasion-resistant material or thermally conducting material.

5. Piezoelectric drive (1) according to one of the preceding claims, **characterized in that** the resonator (2) has an asymmetrical shape and may be brought into oscillation in a longitudinal mode as well as in a transverse mode.

6. Piezoelectric drive (1) according to one of the preceding patent claims, **characterized in that** the piezoelectric drive (1) comprises only one piezoelement (10).

7. Piezoelectric drive (1) according to one of the preceding patent claims, **characterized in that** several piezoelements (10.1, 10.2, 10.3) are connected in parallel to one another.

8. Piezoelectric drive (1) according to one of the preceding patent claims, **characterized in that** the elastic means (4, 6) with respect to the spring effect is designed such that there is effected a reduction in the wear between the resonator and the drive.

9. Piezoelectric drive (1) according to one of the preceding patent claims, **characterized in that** the piezoelement (10) comprises side surfaces and at least one end face, said side surfaces being connected in an electrically conducting manner to an element (4) and said end face being in interactive connection with a resonator (2), in a manner such that the piezoelement (10) is excited into oscillation in the direction of the end faces by way of applying an electrical voltage to the side surfaces, and the interactively connected resonator (2) is excited into oscillation.

10. Piezoelectric drive (1) according to one of the preceding patent claims, **characterized in that** the speed of the driven body (3) may be set by the amplitude of the excitation piezoelement (10).

11. Piezoelectric drive (1) according to one of the preceding patent claims, **characterized in that** the direction of the movement of the driven body (3) may be set by the frequency of the excitation piezoelement (10).

12. Piezoelectric drive (1) according to one of the preceding patent claims, **characterized in that** the resonator (2) has several interactive connections (14) with respect to the body (3) to be driven.

13. Piezoelectric drive (1) according to one of the preceding patent claims, **characterized in that** the body (3) to be driven is a rotor (3) or a linear drive.

14. Piezoelectric drive (1) according to one of the preceding patent claims, **characterized in that** a positioning means (24) produces a change of a measurable variable, in particular a change in impedance or phase, in a manner such that a position of a body (3) may be determined.

15. Method for driving a body, in which a piezoelectric element (10) is displaced into a first and/or second oscillation, that this first and/or second oscillation is transmitted onto an interactively connected resonator (2), wherein this is mounted via elastic means such that it is displaced into a multidimensional oscillation, wherein in certain zones of the resonator (2) there is formed a characteristic, in particular an elliptical movement and that this characteristic movement is transmitted onto a body (3) to be driven so that this body (3) is set into a directed movement, **characterized in that** the resonator (2) is mounted via a spring element (4, 6) attached to the resonator (2), wherein the spring element (4, 6) is formed as part of the resonator (2), i.e. the resonator (2) and the spring element (4, 6) are designed as one piece.

16. Method according to claim 15, **characterized in that** the speed of the driven body (3) is set by the amplitude of the excitation piezoelement (10).

17. Method according to claim 15, **characterized in that** the direction of the movement of the driven body (3) is set by the frequency of the excitation piezoelement (10).

18. Use of a drive (2) according to one of the claims for the piezoelectric drive, in a manner such that it in steps or continuously sets parts in clocks, cameras, data memories, microscope tables or tachometers into movement.

## Revendications

1. Entraînement piézoélectrique (1) comprenant un élément piézoélectrique excitant (10) et un résonateur (2) accouplé à celui-ci, lequel est en liaison efficace avec un corps à entraîner (3), dans lequel le résonateur (2) est monté à l'opposé du corps à entraîner (3) par l'intermédiaire d'un élément faisant ressort (4, 6) et présente une répartition de masse disposée de telle sorte que, en raison d'une oscillation excitante par l'élément piézoélectrique (10) et en fonction de la fréquence de l'oscillation excitante, le résonateur (2) oscille dans plusieurs directions (x, y, z) et ces oscillations soumettent le corps à entraîner (3) à un mouvement dirigé par l'intermédiaire de la liaison efficace, **caractérisé en ce que** le résonateur (2) est monté par l'intermédiaire d'un élément faisant ressort (4, 6) installé sur le résonateur (2), sachant que l'élément faisant ressort (4, 6) est conformé sur le résonateur (2), c'est-à-dire le résonateur (2) et l'élément faisant ressort (4, 6) sont réalisés en un seul tenant.

2. Entraînement piézoélectrique (1) selon la revendication 1, **caractérisé en ce que** le résonateur (2) et l'élément faisant ressort (4, 6) forment une liaison électrique pour exciter l'élément piézoélectrique (10).

3. Entraînement piézoélectrique (1) selon l'une des revendications précédentes, **caractérisé en ce que** le résonateur (2) est constitué d'un élément piézoélectrique (10) et d'un corps oscillant (11,12) qui se trouve en liaison efficace avec celui-ci.

4. Entraînement piézoélectrique (1) selon la revendication 3, **caractérisé en ce que** les corps oscillants (11, 12) sont constitués de matériau électriquement conducteur ou résistant à l'abrasion ou thermiquement conducteur.

5. Entraînement piézoélectrique (1) selon l'une des revendications précédentes, **caractérisé en ce que** le résonateur (2) présente une forme asymétrique et qu'il peut être amené à osciller aussi bien dans un mode longitudinal que dans un mode transversal.

6. Entraînement piézoélectrique (1) selon l'une des revendications précédentes, **caractérisé en ce que** l'entraînement piézoélectrique (1) présente seulement un élément piézoélectrique (10).

7. Entraînement piézoélectrique (1) selon l'une des revendications précédentes, **caractérisé en ce que** plusieurs éléments piézoélectriques (10.1, 10.2, 10.3) sont branchés en parallèle l'un à l'autre.

8. Entraînement piézoélectrique (1) selon l'une des revendications précédentes, **caractérisé en ce que** le moyen élastique (4, 6) est disposé par rapport à la liaison faisant ressort de manière à occasionner une diminution de l'usure entre le résonateur et l'entraînement.

9. Entraînement piézoélectrique (1) selon l'une des revendications précédentes, **caractérisé en ce que** l'élément piézoélectrique (10) présente des surfaces latérales et au moins une surface frontale, dans lequel lesdites surfaces latérales sont reliées avec conduction électrique à un élément (4) et dans lequel la surface frontale est en liaison efficace avec un résonateur (2) de telle sorte que l'élément piézoélectrique (10) est excité pour osciller en direction des surfaces frontales sous l'application d'une tension électrique sur les surfaces latérales, et **en ce que** le résonateur (2) en liaison efficace est excité pour osciller.

10. Entraînement piézoélectrique (1) selon l'une des revendications précédentes, **caractérisé en ce que** la vitesse du corps entraîné (3) peut être ajustée par l'intermédiaire de l'amplitude de l'élément piézoélectrique excitant (10).

11. Entraînement piézoélectrique (1) selon l'une des revendications précédentes, **caractérisé en ce que** la direction du mouvement du corps entraîné (3) peut être ajustée par l'intermédiaire de la fréquence de l'élément piézoélectrique excitant (10).

12. Entraînement piézoélectrique (1) selon l'une des revendications précédentes, **caractérisé en ce que** le résonateur (2) présente plusieurs liaisons efficaces (14) à l'opposé du corps à entraîner (3).

13. Entraînement piézoélectrique (1) selon l'une des revendications précédentes, **caractérisé en ce que** le corps entraîné (3) est un rotor (3) ou un entraînement linéaire.

14. Entraînement piézoélectrique (1) selon l'une des revendications précédentes, **caractérisé en ce qu'**un moyen de positionnement (24) génère une modification d'une grandeur mesurable, en particulier d'une modification d'impédance ou de phase, de telle sorte qu'il est possible de déterminer une position d'un corps (3).

15. Procédé pour entraîner un corps, en lequel:
- un élément piézoélectrique (10) est soumis à une première et/ou à une seconde oscillation ;
- cette première et/ou cette seconde oscillation est transmise à un résonateur (2) se trouvant en liaison efficace, sachant que ce résonateur (2) est monté à l'opposé du corps à entraîner (3) par l'intermédiaire d'un élément faisant ressort (4, 6) ;
- il est soumis à une oscillation multidimensionnelle, opération pendant laquelle un mouvement caractéristique, en particulier elliptique, se réalise dans certaines zones du résonateur (2) ; et
- ce mouvement caractéristique est transmis sur un corps à entraîner (3) de telle sorte que celui-ci est soumis à un mouvement dirigé,
**caractérisé en ce que** le résonateur (2) est monté par l'intermédiaire d'un élément faisant ressort (4, 6) installé sur le résonateur (2), sachant que l'élément faisant ressort (4, 6) est conformé sur le résonateur (2), c'est-à-dire le résonateur (2) et l'élément faisant ressort (4, 6) sont réalisés en un seul tenant.

16. Procédé selon la revendication 15, **caractérisé en ce que** la vitesse du corps entraîné (3) est ajustée par l'intermédiaire de l'amplitude de l'élément piézoélectrique excitant (10).

17. Procédé selon la revendication 15, **caractérisé en ce que** la direction du mouvement du corps entraîné (3) est ajustée par l'intermédiaire de la fréquence de l'élément piézoélectrique excitant (10).

18. Utilisation d'un entraînement (2) selon l'une des revendications pour l'entraînement piézoélectrique, de telle sorte qu'il met des pièces dans des horloges, des caméras, des mémoires de données, des tables de microscopie ou des tachymètres en mouvement, pas à pas ou continuellement.
